# EUROPEAN PATENT SPECIFICATION

(11) **EP 3 286 460 B1**
(45) Date of publication and mention of the grant of the patent: **27.03.2019**
(21) Application number: 15717902.9
(22) Date of filing: 23.04.2015
(51) Int. Cl.: F16H 63/38

(54) **GEAR SHIFT MECHANISM FOR A VEHICLE TRANSMISSION**
GANGSCHALTUNGSMECHANISMUS FÜR EIN FAHRZEUGGETRIEBE
MÉCANISME DE CHANGEMENT DE VITESSE POUR UNE BOÎTE À VITESSES DE VÉHICULE

(43) Date of publication of application: 28.02.2018
(73) Proprietor: Kongsberg Automotive As, 3601 Kongsberg (NO)
(72) Inventor: NORHEIM, Daniel, 3612 Kongsberg (NO)
(74) Representative: Uexküll & Stolberg
(86) International application number: PCT/EP2015/058840
(87) International publication number: WO 2016/169605

(56) References cited:
- EP-A1- 2 140 176
- WO-A1-2007/129902
- BE-A- 495 172
- JP-A- 2014 152 822

## Description

The present invention relates to a gear shift mechanism for a vehicle transmission, the gear shift mechanism comprising a shift shaft, an actuator for acting on the shift shaft to move it between at least two positions, and a detent mechanism including a detent, a detent track having at least one valley, and a spring urging the detent onto the detent track, the detent mechanism being arranged such that the detent moves relative to the detent track responsive to shift shaft movements and reaches a valley when the shift shaft reaches one of the at least two positions to engage the shift shaft there.

Such gear shift mechanisms are utilized in various configurations to change the state of a transmission in response to movement of an input element by the driver. One of many examples is a semi-automatic transmission (also known as clutch-less manual transmission, automated manual transmission, flap-py-paddle gearbox, or paddle-shift gearbox). This eliminates the need for a clutch pedal which the driver otherwise needs to depress before making a gear change, since the clutch itself is actuated by electronic equipment which can synchronize the timing and torque required to make quick, smooth gear shifts.

Input commands can also be transmitted by a cable or other transmission means to a shift shaft of the transmission, wherein the cable or other transmission means acts as an actuator on the shift shaft to move the shift shaft along its longitudinal direction. The shift shaft is provided with a detent track extending along its longitudinal direction and comprising a central valley and a further valley in each direction along its longitudinal direction. A detent is biased by a spring which is oriented perpendicular to the longitudinal direction of the shift shaft and which biases the detent to be pressed onto the detent track. The central valley of the detent track corresponds to the neutral position, and the two adjacent valleys correspond to in gear positions. A shift mechanism of this kind is for example described in JP 2014-152822 A. This document describes a shift mechanism comprising the features of the preamble of claim 1.

There are many other examples for shift mechanisms transmitting a movement of an input element, such as a shift lever, via an actuator, for example a cable, to a shift shaft to move the shift shaft along its longitudinal direction or to turn it about its longitudinal axis. An example for a mechanism of the latter kind is described in WO 2007/129902 A1 in which a servo actuator acts on an actuation lever connected to and extending perpendicular to the shift shaft to turn the shift shaft about its longitudinal axis. A further lever is connected to the shift shaft and carries a detent at its outer end which is urged by a spring within the lever onto a stationary detent track having three valleys corresponding to three turning states of the shift shaft.

A further gear shift mechanism is known from EP 2 140 176 B1. The gear shift system comprises a shift lever to which a shift cable is connected which transmits shift lever movements to an input actuating member which is part of a transmission mechanism for transferring shift commands from the shift lever to the shift shaft. The input actuating member is in this case a valve control lever which is rotatably connected to a shift actuation lever which is fixed to the shift shaft and extends perpendicular therefrom. A servo cylinder is controlled by a servo valve arrangement and coupled to the shift actuation lever so that it can assist in turning the shift shaft about its longitudinal axis. The valve control lever comprises an annular portion with an opening through which the shift shaft extends with limited play. The rotatable connection of the valve control lever to the shift actuation lever is disposed such that the axis of rotation of this connection is parallel to the longitudinal axis of the shift shaft but at a distance to the longitudinal axis of the shift shaft. The servo valve arrangement comprises two opposing servo valves with spring biased plungers which abut against opposite outer surface portions of the annular portion of the valve control lever. The connection between the valve control arm and the shift actuation lever is a connection with limited play, since the valve control arm may rotate with respect to the shift actuation lever but this rotation is limited by the shift shaft which extends through the annular end portion of the valve control arm and thus limits the rotational moving range. Such limited play connection also in principle allows for a purely mechanical actuation of the shift shaft in case of a servo failure, since after the limited shift is used up manual force is transferred through the transmission mechanism to the shift actuation lever which then turns the shift shaft.

If the valve control lever is pivoted by a longitudinal displacement of the shift cable caused by a shift lever movement, the valve control lever on the one hand transfers torque to the shift actuation lever, on the other hand the valve control arm is rotated around its rotatable connection to the shift actuation lever which causes a displacement of its annular portion. This shift in the relative positioning is controlling the servo mechanism since the rotation of the valve control arm and the corresponding displacement of its annular end portion lead to a displacement of the plunger of the servo valve arrangement which in turn activate the servo cylinder which then exerts a torque on the shift shaft by exerting a force on the shift actuation lever to perform the desired shift movement of the shift shaft. A detent mechanism comprising a spring biased detent and a cooperating detent track is acting between the valve control lever and a part fixed with respect to the gearbox housing. The detent track is formed on one end portion of the valve control lever and comprises three valleys corresponding to the two shifted positions and the neutral position in the middle. A spring which is oriented perpendicular to the longitudinal axis of the shift shaft urges the detent onto the detent track. When the valve control lever reaches a position such that the detent reaches one of the valleys this also provides a feedback through the cable which is connected to the valve control lever and eventually to the shift lever such that the operator gets a feedback for the shift command.

For such mechanisms with limited play connection it has recently been suggested to arrange the detent mechanism such that it is acting between (i) the input actuating member or a component that is linked to the input actuating member such that it follows its movements, and (ii) the shift actuation lever or a component that is linked to the shift actuation lever such that it follows its turning movements, so that the detent reaching a central valley of the detent track indicates that the shift shaft has reached its neutral or in-gear position as dictated by the input actuating member. In such an arrangement a detent track having a single central valley is sufficient since the detent mechanism is giving an indication whether the shift shaft reached the position dictated by the input actuating member which is a single bit information. In other words, the detent mechanism indicates, when the detent reaches the central valley of the detent track, that the shift shaft reached its rotational shift position that is dictated by the shift actuating member, regardless whether this dictated position is the neutral position, the forward shifted position or the backward shifted position. The present invention is also applicable to shift mechanisms having a detent and a detent track with only a single valley.

All such gear shift mechanisms utilizing a detent mechanism have in common that the spring that is urging the detent onto the detent track is oriented perpendicular to the detent track such that it can exert a force that is perpendicular to the detent track. For the mechanisms described this also implies that the spring of the detent mechanism is oriented with its longitudinal axis perpendicular to the longitudinal axis of the shift shaft. The spring is a compression or helical spring and has a certain extension in axial direction of the helical spring.

It is an object of the present invention to provide a gear shift mechanism employing a detent mechanism such that the gear shift mechanism can be accommodated in a space efficient manner, i.e. requires a reduced installation space.

This object is achieved by a gear shift mechanism comprising the features of claim 1. Preferred embodiments of the invention are set out in the dependent claims.

According to the present invention the spring of the detent mechanism is disposed such that its compression force is directed parallel to the longitudinal axis of the shift shaft. The spring is acting on a push body which is moveably amounted in the direction of the longitudinal axis of the spring. The push body is in contact with the detent, and at least one of the contact surfaces of the push body and the detent is at least partially inclined such that a force on the push body in a direction parallel to the longitudinal axis of the shift shaft is transmitted to a force perpendicular to the longitudinal axis of the shift shaft and onto the detent track when the detent is displaced from the centre of the valley. In this arrangement the spring is arranged with its longitudinal axis parallel to the longitudinal axis of the shift shaft which allows for a much more space efficient arrangement compared to the prior art where the spring with its longitudinal axis has been oriented perpendicular to the longitudinal axis of the shift shaft. By arranging the contact surfaces of the detent and the push body to be at least partially inclined with respect to the longitudinal axis of the spring and with respect to the longitudinal axis of the detent the compression force of the spring and of the push body is transmitted or deflected by 90° to the detent. The contact surfaces of the push body and the detent are arranged such that such force deflection or transmission occurs at least when the detent is displaced from the centre of a valley in the detent track.

According to a preferred embodiment the detent mechanism includes a housing having a first cylindrical cavity. In this first cylindrical cavity the spring and part of the push body are received, wherein the longitudinal axis of the first cylindrical cavity is parallel to the longitudinal axis of the shift shaft. A second cylindrical cavity in the housing is merging with the first the cylindrical cavity so that the push body is disposed in the merging area of the first and second cylindrical cavities. The longitudinal axis of the second cylindrical cavity is perpendicular to the longitudinal axis of the shift shaft. The detent is slidably received in the second cylindrical cavity such that the push body is able to urge the detent to move towards the detent track.

In a preferred embodiment the push body has a spherical surface tip facing the detent and the detent has a valley in its outer surface. The valley is arranged to be able to receive a portion of the spherical surface of the push body. In this manner the push body exerts a force on the detent along its longitudinal axis further compressing the spring when the push body is displaced from the center of the valley in the outer surface of the detent. In a preferred embodiment this valley in the outer surface of the detent is formed by a circumferential groove extending around the circumference of a piston-like body of the detent.

In an alternative embodiment the push body and the detent each have a wedge surface portion which wedge surface portions are in contact with each other and which are inclined with respect to the longitudinal direction of the shift shaft and inclined with respect to the direction of the compression force of the spring. In this manner the wedge surface portions in contact with each other create a wedge effect which deflects the compression force of the spring which is directed parallel to the longitudinal axis of the shift shaft into a force perpendicular thereto urging the detent onto the detent track. In a preferred embodiment the angle of inclination of the wedge surface portions with respect to the longitudinal direction of the shift shaft is about 45°.

In a preferred embodiment the gear shift mechanism is arranged to effect shift shaft movements along its longitudinal axis, in that the detent track is formed on the outer surface of the shift shaft or of component fixed to the shift shaft and extends along its longitudinal direction, and in that the spring is arranged parallel to the detent track and parallel to the longitudinal axis of the shift shaft above the detent track.

Alternatively, the gear shift mechanism is arranged to effect a shift shaft movement by turning the shift shaft about its longitudinal axis by exerting force on a shift actuation lever extending perpendicular to the shift shaft. This results in a torque on the shift shaft. The detent and the detent track are arranged such that the detent moves along the detent track in response to pivotal movements of the shift actuation lever. Furthermore, the spring is disposed such that its compression force is directed perpendicular to the shift actuation lever.

In a preferred embodiment the detent carries at its end facing the detent track a ball which is in contact with the detent track. Preferably, the ball is mounted in a tip portion of the detent to be rotatable therein.

The detent can have the form of a piston which is moveable in a direction perpendicular to the detent track so that it is moved up and down when the detent slides along an elevation on the detent track.

The invention will in the following be described with reference to an embodiment shown in the drawings in which:
Fig. 1 shows a cross-sectional view of a part of a shifter mechanism according to the present invention, wherein the detent is located in the centre of the central valley of the detent track;
Figs. 2 to 6 show a sequence of views as in Fig. 1 in which the detent track moves relative to the detent such that the detent is moved to the next valley adjacent the central valley; and
Fig. 7 shows a view as in Figs. 1 to 6, wherein the detent track has been moved with the shift shaft in the opposite direction such that the detent has reached the opposite valley following the centre valley.

In the Figures an embodiment is shown in which the shift shaft is moved by the shift mechanism along the direction of the longitudinal axis of the shift shaft. The detent track 10 is formed on the outer surface of a sleeve 4 which is fixed to the shift shaft 2 such that it follows its movement. The detent track 10 has a central valley 11 and an adjacent valley 14 in one direction and an adjacent valley 16 in the opposite direction. Between adjacent valleys a crest 12 is formed. Such a shifter mechanism can for example be employed in a semi-automatic transmission in which gear changes are effected by tipping on a rocker on the steering wheel.

The detent mechanism comprises a housing 34 stationary with respect to the transmission. This housing has two bores or cylindrical cavities, namely a first cylindrical cavity 36 with an axial direction parallel to the longitudinal axis of the shift shaft 2, and a second cylindrical cavity 38 with an axial direction perpendicular to the longitudinal axis of the shift shaft 2. The first cylindrical cavity 36 opens into the second cylindrical cavity 38.

In the first cylindrical cavity 36 a compression spring 30 is disposed which acts between a bottom wall of the first cylindrical cavity 36 and a push body 40. In this embodiment the push body 40 is formed by a ball. The ball is received in the first cylindrical cavity 36 such that it can perform sliding movements along the axial direction within the firs cylindrical cavity 36.

In the second cylindrical cavity 38 a detent 20 is disposed that can slide along the longitudinal axis of the second cylindrical cavity 38. The plunger or detent 20 carries a ball 26 at its outer end facing the detent track 10. The detent 20 is provided with a valley 22 in its outer surface. This valley 22 can be formed by a circumferential groove extending around the detent 20. The valley 22 is dimensioned such that it can receive a spherical front portion of the push body 40 in the form of a ball. The valley 22 in the detent 20 has a valley centre 24, and on opposite sides of the valley centre 24 inclined side wall portions rising up to the outer surface of the detent outside of the valley. The inclined wall portions of the valley 22 are inclined both with respect to the longitudinal axis of the first cylindrical cavity 36 and with respect to the longitudinal axis of the second cylindrical cavity 38. By "inclined" an orientation is meant which is noticeably different from 0° and 90° with respect to the mentioned directions.

The inclined side portions of the valley 22 cooperate with the inclined or curved surface portions of the ball of the push body 40 to effect a wedge function which is suitable to deflect the force of the compression spring 30 along the longitudinal direction of the first cylindrical cavity 36 to a force perpendicular thereto acting on detent 20 along the longitudinal direction of the second cylindrical cavity 38.

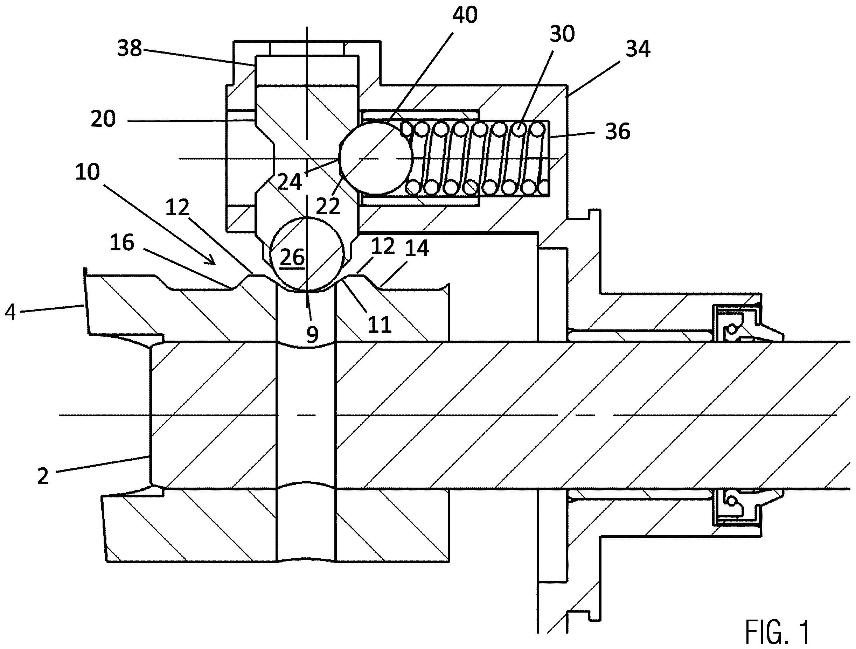

Fig. 1 shows the detent mechanism of the gear shifter mechanism in its centre, neutral position which means that the ball 26 of the detent 20 is disposed with its outer tip portion in the centre 9 of the central valley 11. In this position also the push body 40 in the form of a ball is located in the centre 24 of the valley 22 in the outer surface of the detent 20. It should be noted that in this centered position no force is exerted on the detent 20 towards the detent track 10 because the inclined side wall portions of the valley 22 and the tip portion on the ball of the push body 40 are symmetrical so that no net force on the detent is generated in the direction of longitudinal axis of the second cylindrical cavity 38.

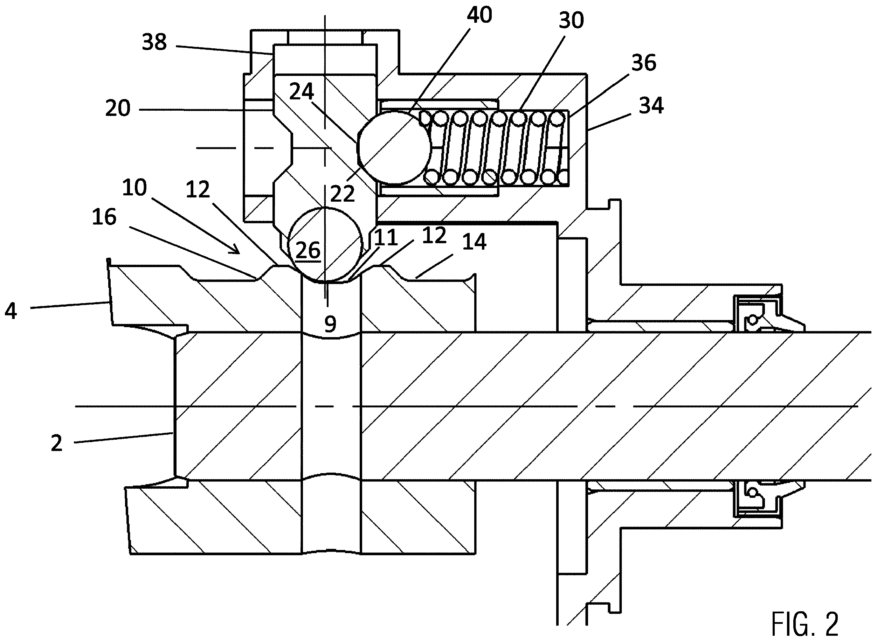

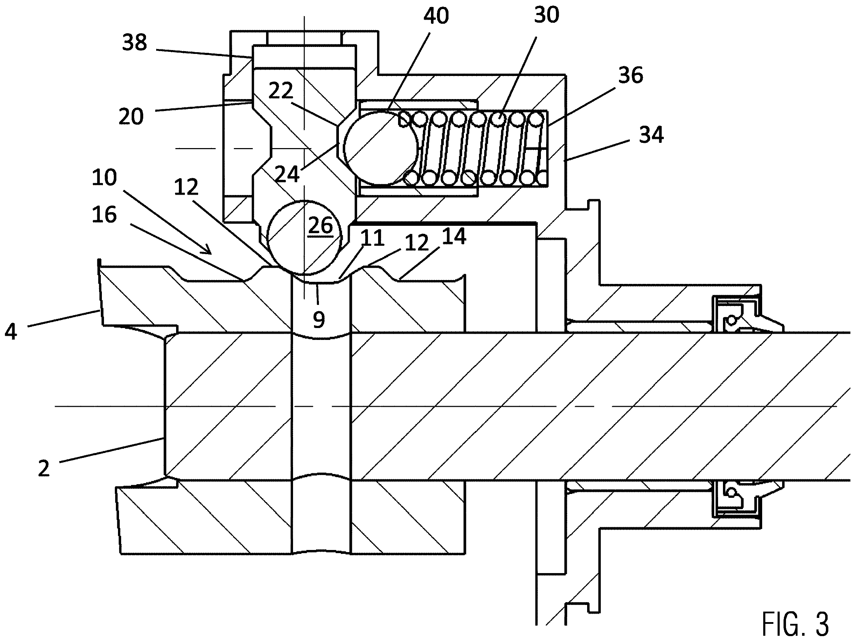

In Fig. 2 a shift actuation movement has started which causes a movement of the shift shaft 2 along its longitudinal axis (to the right hand side in Fig. 2 and the following Figs. 3 to 6). In Fig. 2 the ball 26 of the detent 20 has started to move out of its centered location in the central valley 11 of the detent track 10. However, since the central valley is rising rather smoothly at the beginning the displacement of the ball 26 of the detent 20 has not yet resulted in a noticeable displacement of the detent 20 along the longitudinal direction of the second cylindrical cavity 38, i.e. the detent has not yet start to move upwards to a noticeable extent.

In Fig. 3 the ball 26 of the detent 20 has reached the steeper rising side wall portion of the central valley 11. The upward sliding movement of the ball 26 towards the crest 12 caused an upward movement of the detent 20 along the longitudinal direction of the second cylindrical cavity 38. This upward movement of the detent 20 is accompanied by a relative movement of the ball of the push body 40 relative to the valley 22 of the detent 20, wherein the ball has started to slide along the inclined side wall portions of the valley 22. This in turn results in a force on the push body 40 moving the ball backwards further into the first cylindrical cavity 36. This backward movement of the push body 40 causes a further compression of the spring 30. Therefore, the upward movements of the detent 20 further into the second cylindrical cavity 38 causes a counter-force generated by the further compression of the spring 30 and the inclined contact surfaces of the ball of the push body 40 and the inclined side wall portions of the valley 22.

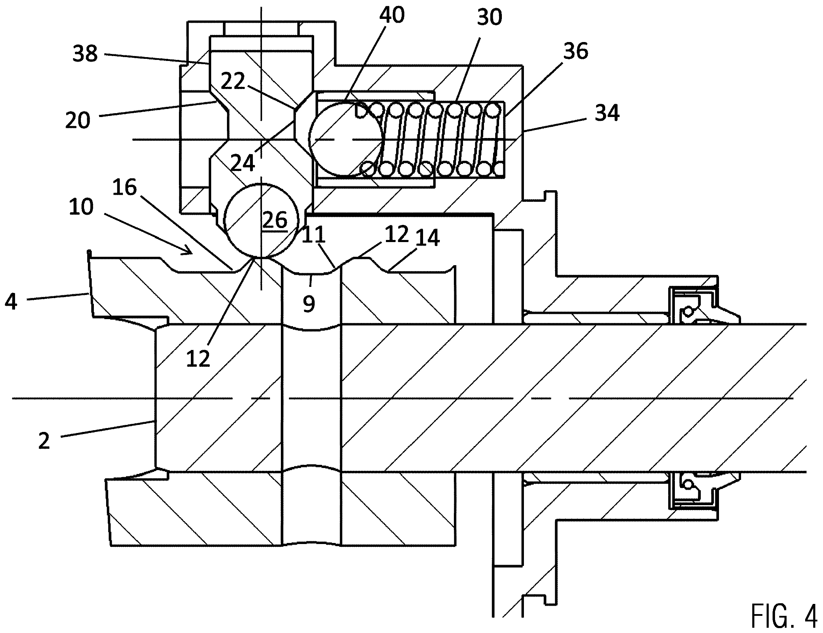

In Fig. 4 the ball 26 of the detent 20 has reached the centre of the crest 12. This position corresponds to the maximum displacement of the detent 20 away from the bottom of the centre 9 of the central valley 11. In this position the detent 20 is displaced upwards such that the contact area between the ball of the push body 40 and the inclined side wall portion of the valley is close to the outer end of the inclined side wall portion. In this position the contact surfaces of the ball of the push body 40 and the side wall portions of the valley 22 of the detent 20 are still inclined such that the push body 40 exerts a wedge force on the detent 20 urging the detent 20 in downward direction towards the detent track 10.

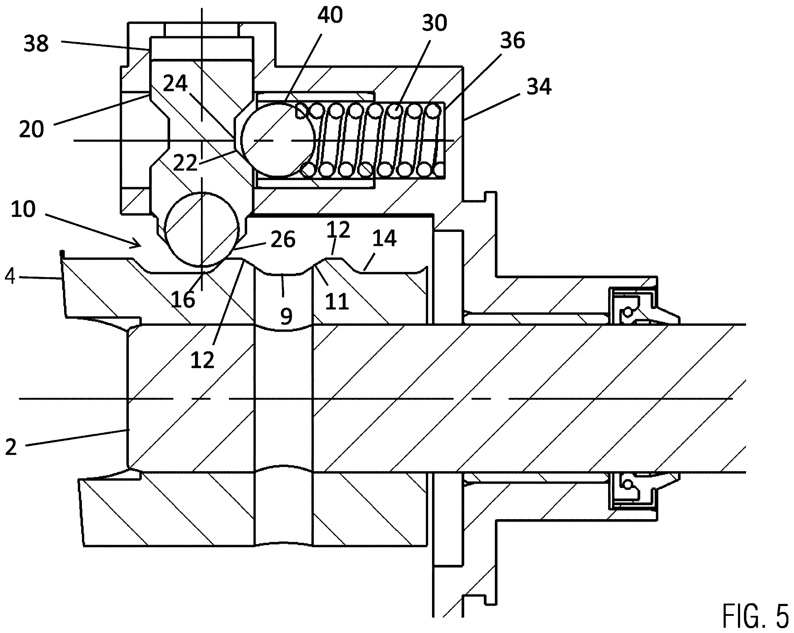

Further movement of the shift shaft 2 along its longitudinal direction causes movement of the ball 26 of the detent relative to the detent track 10 such that the ball starts to slide down from the crest 12 towards the adjacent valley 16, as shown in Fig. 5. In this state the force of compression spring 30 and the inclined contact surfaces between the detent and the ball of the push body 40 generate a wedge effect urging the detent 10 further in downward direction towards the detent track.

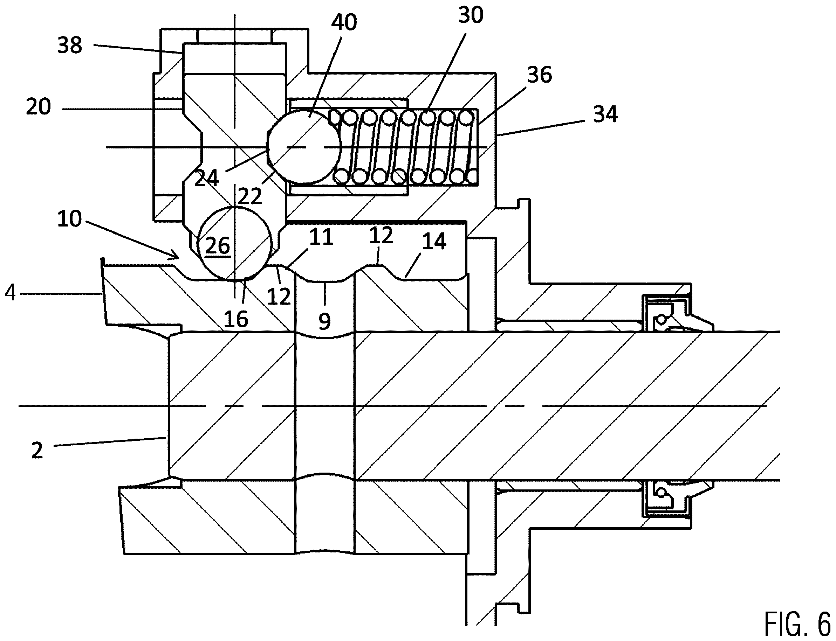

In Fig. 6 movement of the shift shaft 2 along its longitudinal axis has been completed, wherein this end position of the shift shaft 2 corresponds to an in-gear position of the shift shaft. In this position the ball 26 of the detent 20 has reached the bottom of the adjacent valley 16. In addition, the ball of the push body 40 has reached its centered position relative to the valley 22 in the detent again so that the detent is engaged in the in-gear position of the shift shaft 2. This corresponds also to an engagement of the shift shaft 2 in the in gear position as shown in Fig. 6.

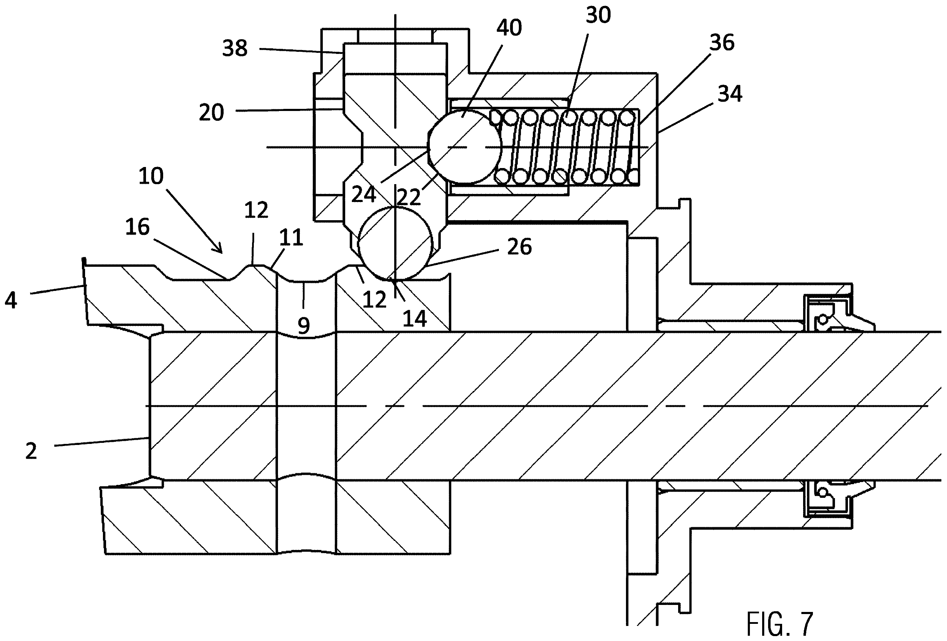

Fig. 7 shows the shift shaft 2 in its opposite in-gear position with the detent 20 with its ball 26 engaged in the other adjacent valley 14. The movement states for a movement of the shift shaft from the neutral position as shown in Fig. 1 to the opposite in-gear position as shown in Fig. 7 correspond to the movement states as shown and explained in connection with Figs. 2 to 6 in a symmetric manner in the opposite direction.

As can be seen from the Figures the arrangement according to the present invention with the spring 30 extending with its longitudinal axis parallel to the longitudinal axis of the shift shaft 2 allows for a more compact design of the gear shift mechanism. According to prior art designs the spring 30 would be disposed with its longitudinal axis extending along the longitudinal axis of the second cylindrical cavity 38, and the spring 30 would, in the views of the Figures, be located vertically on top of the detent 20. It is evident that the arrangement according to the present invention placing the spring 30 with its longitudinal axis parallel to the longitudinal axis of the shift shaft 2 allows for a much more compact design since the compression spring 30 can be disposed in a location that is radially much closer to the shift shaft 2 so that less building space in radial direction with respect to the longitudinal axis of the shift shaft 2 is required.

Such advantage can also be achieved for the various kinds of shifter mechanisms described in the introduction of this application. In all these mechanisms it was necessary that the spring was located "behind" the detent with respect to the detent track which required a building space perpendicular to the detent track that could accommodate for the sum of the axial extension of the detent and of the axial extension of the spring. With the design according to the present invention the detent and the compression spring can be disposed side by side next to each other with respect to the detent track. In addition the spring is disposed with its axial elongation parallel to the detent track such that less building space perpendicular to the detent track is required.

## Claims

1. A gear shift mechanism for a vehicle transmission, the gear shift mechanism comprising a shift shaft (2), an actuator for acting on the shift shaft to move it between at least two positions, and a detent mechanism including a detent (20), a detent track (10) having at least one valley (11, 14, 16), and a spring (30) urging the detent onto the detent track, the detent mechanism being arranged such that the detent moves relative to the detent track responsive to shift shaft movements and reaches a valley when the shift shaft reaches one of the at least two positions to engage the shift shaft there, **characterized in that** the spring (30) is disposed such that its compression force is directed parallel to the longitudinal axis of the shift shaft (2), the spring (30) is acting on a push body (40) which is in contact with the detent (20), and at least one of the contact surfaces of the push body (40) and the detent (20) is at least partially inclined such that the spring force on the push body (40) in a direction parallel to the longitudinal axis of the shift shaft (2) is transmitted to a force on the detent (20) perpendicular to the longitudinal axis of the shift shaft (2) and onto the detent track (10) when the detent (20) is displaced from the centre of the valley.

2. The gear shift mechanism according to claim 1, **characterized in that** the detent mechanism comprises housing (34) including a first cylindrical cavity (36) in which the spring (30) and part of the push body (40) are received, the longitudinal axis of the first cylindrical cavity (36) being oriented parallel to the longitudinal axis of the shift shaft (2), and a second cylindrical cavity (38) merging into the first cylindrical cavity (36), the longitudinal axis of the second cylindrical cavity (38) being perpendicular to the longitudinal axis of the shift shaft (2), the detent (20) being slidably received in the second cylindrical cavity (38) to urge the detent (20) to move towards the detent track (10).

3. The gear shift mechanism according to claim 1 or 2, **characterized in that** the push body (40) has a spherical surface facing the detent (20) and that the detent (20) has a valley (22) in its outer surface, which valley (22) is able to receive a portion of the spherical surface of the push body (40) such that the push body exerts a force on the detent (20) along its longitudinal axis when the push body (40) is displaced from the centre (24) of the valley (22) in the outer surface of the detent (20).

4. The gear shift mechanism according to claim 3, **characterized in that** the valley (22) in the outer surface of the detent (20) is formed by a circumferential groove extending around a body of the detent (20).

5. The gear shift mechanism according to claim 1 or 2, **characterized in that** the push body and the detent each have a wedge surface portion which wedge surface portions are in contact with each other and which are inclined with respect to the longitudinal direction of the shift shaft and inclined with respect to the direction of the compression force of the spring.

6. The gear shift mechanism according to claim 5, **characterized in that** the angle of inclination of the wedge surface portions with respect to the longitudinal direction of the shift shaft is about 45°.

7. The gear shift mechanism according to any of the preceding claims, **characterized in that** gear shift mechanism is arranged to effect shift shaft movements along its longitudinal axis, the detent track (10) is formed on the outer surface of the shift shaft (2) or on the outer surface of a component fixed to the shift shaft and extends along the longitudinal direction of the shift shaft, and **in that** the spring (30) is arranged parallel to the detent track (10) and parallel to the longitudinal axis of the shift shaft (2) above the detent track (10).

8. The gear shift mechanism according to any of the preceding claims 1 to 6, **characterized in that** gear shift mechanism is arranged to effect shift shaft movements by turning the shift shaft about its longitudinal axis by exerting force on a shift actuation lever extending perpendicular to the shift shaft which results in a torque on the shift shaft, the detent and the detent track (10) are arranged such that the detent moves along the detent track in response to pivotal movements of the shift actuation lever, and **in that** the spring is disposed such that its compression force is directed perpendicular to the shift actuation lever.

9. The gear shift mechanism according to any of the preceding claims, **characterized in that** the detent (20) carries at its end facing the detent track (10) a ball (26) which is in contact with the detent track.

10. The gear shift mechanism according to claim 9, **characterized in that** the ball (26) is mounted in a tip portion of the detent (20) to be rotatable therein.

## Patentansprüche

1. Gangschaltmechanismus für ein Fahrzeuggetriebe, wobei der Gangschaltmechanismus eine Schaltwelle (2), eine Betätigungseinrichtung zum Einwirken auf die Schaltwelle, um sie zwischen wenigstens zwei Stellungen zu bewegen, und einen Rastmechanismus aufweist, der ein Einrastelement (20), eine Einrastbahn (10) mit wenigstens einer Vertiefung (11, 14, 16) und eine Feder (30) umfasst, die das Einrastelement auf die Einrastbahn drückt, wobei der Rastmechanismus derart ausgestaltet ist, dass das Einrastelement sich in Reaktion auf Schaltwellenbewegungen relativ zu der Einrastbahn bewegt und eine Vertiefung erreicht, wenn die Schaltwelle eine der wenigstens zwei Stellungen erreicht, um die Schaltwelle dort einrasten zu lassen, **dadurch gekennzeichnet, dass** die Feder (30) so angeordnet ist, dass ihre Kompressionskraft parallel zur Längsachse der Schaltwelle (2) gerichtet ist, dass die Feder (30) auf einen Druckkörper (40) einwirkt, der in Kontakt mit dem Einrastelement (20) ist, und dass wenigstens eine der Kontaktoberflächen des Druckkörpers (40) und des Einrastelements (20) wenigstens teilweise geneigt ist, so dass die in Richtung parallel zur Längsachse der Schaltwelle (2) gerichtete Federkraft auf den Druckkörper (40) in eine Kraft auf das Einrastelement (20) übertragen wird, die senkrecht zur Längsachse der Schaltwelle (2) und auf die Einrastbahn (10) gerichtet ist, wenn das Einrastelement (20) aus dem Zentrum der Vertiefung verschoben ist.

2. Gangschaltmechanismus nach Anspruch 1, **dadurch gekennzeichnet, dass** der Einrastmechanismus ein Gehäuse (34) mit einem ersten zylindrischen Hohlraum (36), in dem die Feder (30) und ein Teil des Druckkörpers (40) aufgenommen sind, wobei die Längsachse des ersten zylindrischen Hohlraums (36) parallel zur Längsachse der Schaltwelle (2) orientiert ist, und einen zweiten zylindrischen Hohlraum (38) aufweist, der in den ersten zylindrischen Hohlraum (36) mündet, wobei die Längsachse des zweiten zylindrischen Hohlraums (38) senkrecht zur Längsachse der Schaltwelle (2) steht, wobei das Einrastelement (20) gleitfähig in dem zweiten zylindrischen Hohlraum (38) aufgenommen ist, damit das Einrastelement (20) vorgespannt ist, um sich auf die Einrastbahn (10) zu zu bewegen.

3. Gangschaltmechanismus nach Anspruch 1 oder 2, **dadurch gekennzeichnet, dass** der Druckkörper (40) eine sphärische Oberfläche hat, die dem Einrastelement (20) zugewandt ist, und dass das Einrastelement (20) eine Vertiefung (22) in seiner Außenfläche hat, wobei die Vertiefung (22) dazu in der Lage ist, einen Teilbereich der sphärischen Oberfläche des Druckkörpers (40) aufzunehmen, so dass der Druckkörper eine Kraft auf das Einrastelement (20) entlang dessen Längsachse ausübt, wenn der Druckkörper (40) aus dem Zentrum (24) der Vertiefung (22) in der Außenfläche des Einrastelements (20) verschoben wird.

4. Gangschaltmechanismus nach Anspruch 3, **dadurch gekennzeichnet, dass** die Vertiefung (22) in der Außenfläche des Einrastelements (20) durch eine umlaufende Nut gebildet ist, die um einen Körper des Einrastelements (20) herum ausgedehnt ist.

5. Gangschaltmechanismus nach Anspruch 1 oder 2, **dadurch gekennzeichnet, dass** der Druckkörper und das Einrastelement jeweils Keiloberflächenbereiche haben, die in Kontakt miteinander sind und die in Bezug auf die Längsrichtung der Schaltwelle geneigt sind und in Bezug auf die Richtung der Kompressionskraft der Feder geneigt sind.

6. Gangschaltmechanismus nach Anspruch 5, **dadurch gekennzeichnet, dass** der Neigungswinkel der Keiloberflächenbereiche in Bezug auf die Längsrichtung der Schaltwelle etwa 45° beträgt.

7. Gangschaltmechanismus nach einem der vorhergehenden Ansprüche, **dadurch gekennzeichnet, dass** der Gangschaltmechanismus dazu ausgestaltet ist, Schaltwellenbewegungen entlang ihrer Längsachse zu bewirken, dass die Einrastbahn (10) auf der Außenfläche der Schaltwelle (2) oder auf der Außenfläche einer an der Schaltwelle befestigten Komponente gebildet ist und sich entlang der Längsrichtung der Schaltwelle erstreckt, und dass die Feder (30) parallel zur Einrastbahn (10) und parallel zur Längsachse der Schaltwelle (2) über der Einrastbahn (10) angeordnet ist.

8. Gangschaltmechanismus nach einem der vorhergehenden Ansprüche 1 bis 6, **dadurch gekennzeichnet, dass** der Gangschaltmechanismus dazu ausgestaltet ist, um Schaltwellenbewegungen durch Drehung der Schaltwelle um ihre Längsachse zu bewirken, indem Kraft auf einen Schaltbetätigungshebel ausgeübt wird, der senkrecht von der Schaltwelle absteht, was zu einem Drehmoment auf die Schaltwelle führt, dass das Einrastelement und die Einrastbahn (10) so ausgestaltet sind, dass sich das Einrastelement in Reaktion auf Schwenkbewegungen des Schaltbetätigungshebels entlang der Einrastbahn bewegt, und dass die Feder so angeordnet ist, dass ihre Kompressionskraft senkrecht zu dem Schaltbetätigungshebel gerichtet ist.

9. Gangschaltmechanismus nach einem der vorhergehenden Ansprüche, **dadurch gekennzeichnet, dass** das Einrastelement (20) an seinem der Einrastbahn (10) zugewandten Ende eine Kugel (26) trägt, die in Kontakt mit der Einrastbahn ist.

10. Gangschaltmechanismus nach Anspruch 9, **dadurch gekennzeichnet, dass** die Kugel (26) in einem Spitzenbereich des Einrastelements (20) gelagert ist, um darin drehbar zu sein.

## Revendications

1. Mécanisme de changement de vitesse pour une boîte à vitesses de véhicule, le mécanisme de changement de vitesse comprenant un arbre de changement de vitesse (2), un actionneur pour agir sur l'arbre de changement de vitesse afin de le déplacer entre au moins deux positions, et un mécanisme d'enclenchement comportant un élément d'enclenchement (20), un chemin d'enclenchement (10) ayant au moins un creux (11, 14, 16), et un ressort (30) amenant l'élément d'enclenchement sur le chemin d'enclenchement, le mécanisme d'enclenchement étant agencé de telle sorte que l'élément d'enclenchement se déplace par rapport au chemin d'enclenchement en réponse aux mouvements de l'arbre de changement de vitesse et atteint un creux lorsque l'arbre de changement de vitesse atteint l'une des au moins deux positions pour que l'arbre de changement de vitesse se mette en prise dans celle-ci, **caractérisé en ce que** le ressort (30) est disposé de telle sorte que sa force de compression soit dirigée parallèlement à l'axe longitudinal de l'arbre de changement de vitesse (2), le ressort (30) agit sur un corps de poussée (40) qui est en contact avec l'élément d'enclenchement (20), et au moins l'une des surfaces de contact du corps de poussée (40) et de l'élément d'enclenchement (20) est au moins partiellement inclinée de telle sorte que la force du ressort sur le corps de poussée (40) dans une direction parallèle à l'axe longitudinal de l'arbre de changement de vitesse (2) est transmise à une force sur l'élément d'enclenchement (20) perpendiculaire à l'axe longitudinal de l'arbre de changement de vitesse (2) et sur le chemin d'enclenchement (10) lorsque l'élément d'enclenchement (20) est déplacé par rapport au centre du creux.

2. Mécanisme de changement de vitesse selon la revendication 1, **caractérisé en ce que** le mécanisme d'enclenchement comprend un logement (34) comportant une première cavité cylindrique (36) dans laquelle sont reçus le ressort (30) et une partie du corps de poussée (40), l'axe longitudinal de la première cavité cylindrique (36) étant orienté parallèlement à l'axe longitudinal de l'arbre de changement de vitesse (2), et une seconde cavité cylindrique (38) se fondant dans la première cavité cylindrique (36), l'axe longitudinal de la seconde cavité cylindrique (38) étant perpendiculaire à l'axe longitudinal de l'arbre de changement de vitesse (2), l'élément d'enclenchement (20) étant reçu de manière coulissante dans la seconde cavité cylindrique (38) pour amener l'élément d'enclenchement (20) à se déplacer vers le chemin d'enclenchement (10).

3. Mécanisme de changement de vitesse selon la revendication 1 ou 2, **caractérisé en ce que** le corps de poussée (40) a une surface sphérique faisant face à l'élément d'enclenchement (20) et **en ce que** l'élément d'enclenchement (20) a un creux (22) dans sa surface externe, lequel creux (22) est apte à recevoir une partie de la surface sphérique du corps de poussée (40) de telle sorte que le corps de poussée exerce une force sur l'élément d'enclenchement (20) le long de son axe longitudinal lorsque le corps de poussée (40) est déplacé par rapport au centre (24) du creux (22) dans la surface externe de l'élément d'enclenchement (20).

4. Mécanisme de changement de vitesse selon la revendication 3, **caractérisé en ce que** le creux (22) dans la surface externe de l'élément d'enclenchement (20) est formé par une gorge circonférentielle s'étendant autour d'un corps de l'élément d'enclenchement (20).

5. Mécanisme de changement de vitesse selon la revendication 1 ou 2, **caractérisé en ce que** le corps de poussée et l'élément d'enclenchement ont chacun une partie en pente, lesquelles parties en pente sont en contact l'une avec l'autre et lesquelles sont inclinées par rapport à la direction longitudinale de l'arbre de changement de vitesse et inclinées par rapport à la direction de la force de compression du ressort.

6. Mécanisme de changement de vitesse selon la revendication 5, **caractérisé en ce que** l'angle d'inclinaison des parties en pente par rapport à la direction longitudinale de l'arbre de changement de vitesse est d'environ 45°.

7. Mécanisme de changement de vitesse selon l'une quelconque des revendications précédentes, **caractérisé en ce que** le mécanisme de changement de vitesse est agencé pour effectuer les mouvements de l'arbre de changement de vitesse le long de son axe longitudinal, le chemin d'enclenchement (10) est formé sur la surface externe de l'arbre de changement de vitesse (2) ou sur la surface externe d'un composant fixé à l'arbre de changement de vitesse et s'étend le long de la direction longitudinale de l'arbre de changement de vitesse, et **en ce que** le ressort (30) est agencé parallèlement au chemin d'enclenchement (10) et parallèlement à l'axe longitudinal de l'arbre de changement de vitesse (2) au-dessus du chemin d'enclenchement (10).

8. Mécanisme de changement de vitesse selon l'une quelconque des revendications 1 à 6 précédentes, **caractérisé en ce que** le mécanisme de changement de vitesse est agencé pour effectuer des mouvements de l'arbre de changement de vitesse en faisant tourner l'arbre de changement de vitesse autour de son axe longitudinal en exerçant une force sur le levier de commande de changement de vitesse s'étendant perpendiculairement à l'arbre de changement de vitesse ce qui aboutit à un couple sur l'arbre de changement de vitesse, l'élément d'enclenchement et le chemin d'enclenchement (10) sont agencés de telle sorte que l'élément d'enclenchement se déplace le long du chemin d'enclenchement en réponse aux mouvements de pivotement du levier de commande de changement de vitesse, et **en ce que** le ressort est disposé de telle sorte que sa force de compression est dirigée perpendiculairement au levier de commande de changement de vitesse.

9. Mécanisme de changement de vitesse selon l'une quelconque des revendications précédentes, **caractérisé en ce que** l'élément d'enclenchement (20) porte au niveau de son extrémité faisant face au chemin d'enclenchement (10) une bille (26) qui est en contact avec le chemin d'enclenchement.

10. Mécanisme de changement de vitesse selon la revendication 9, **caractérisé en ce que** la bille (26) est montée dans une partie formant pointe de l'élément d'enclenchement (20) pour pouvoir tourner à l'intérieur.
